# DEMANDE DE BREVET EUROPEEN

(11) **EP 4 470 367 A1**
(43) Date de publication de la demande: **04.12.2024**
(21) Numéro de dépôt: 24020167.3
(22) Date de dépôt: 24.05.2024
(51) Int. Cl.: A01K 1/04, A01K 27/00, E05B 47/00, E05B 73/00, E05B 67/00, G07C 9/00

(54) **KIT ANTIVOL POUR ANIMAL DE COMPAGNIE**

(30) Priorité: 29.05.2023 FR 2305307
(71) Demandeur: Stona, Daniel, 1201 Geneve (CH)
(72) Inventeur: Stona, Daniel, 1201 Geneve (CH)
(74) Mandataire: Stona, Daniel

(57) **Abrégé**

L'invention concerne un kit antivol pour animal de compagnie, comprenant :
1) un ensemble collier-laisse comprenant :
- un support (1) comportant des moyens de commande comprenant des moyens électroniques,
- un lien (6) dont une extrémité (7) est fixée au support (1) et l'autre (8) est libre et apte à être fixée au support (1) à l'aide de premiers moyens de verrouillage/déverrouillage électromagnétiques (9) aptes à être commandés par les moyens de commande,
- au moins une laisse (27) dont une extrémité (28) est fixée au support (1) et l'autre (29) est libre et comprend des deuxièmes moyens de verrouillage/déverrouillage électromagnétiques (30) aptes à être commandés par les moyens de commande,
- au moins une source d'énergie électrique pour alimenter au moins les moyens électroniques,
dans lequel les moyens de commande comprennent en outre un récepteur (31) coopérant avec les moyens électroniques et ceux-ci :
- comprennent une mémoire contenant au moins un premier code et un deuxième code et
- sont aptes à
• transformer un signal reçu par le récepteur (31) en un code, à
• comparer ce code au premier code et au deuxième code, à
• commander les premiers moyens de verrouillage/déverrouillage (9) si le code est identique au deuxième code et à
• commander les deuxièmes moyens de verrouillage/déverrouillage (30) si le code est identique au premier code, et

2) un appareil apte à émettre au moins un premier signal et un deuxième signal destinés au récepteur (31) des moyens de commande et correspondant respectivement au premier code et au deuxième code.

## Description

L'invention concerne un kit antivol pour animal de compagnie ainsi qu'une méthode d'attache sécurisée d'un animal de compagnie à un élément fixe tel qu'un poteau.

### Arrière-plan de l'invention

Dans le brevet étasunien n° US 8 683 959 déposé sous forme provisoire en 2010, il est mentionné qu'il est possible d'avoir un premier verrouillage au niveau du collier et un deuxième verrouillage au niveau de la poignée, ces verrouillages étant activés séparément pour fixer la poignée à la laisse à une extrémité et le collier à la laisse à l'autre extrémité. En variante, le système peut avoir un verrouillage capable de fixer simultanément le collier et les extrémités de la poignée.

Il peut aussi y avoir au moins un fil électrique pour transmettre de l'énergie à un solénoïde depuis un verrouillage situé dans le logement de poignée ou un point d'activation, tel qu'un bouton situé sur le logement de poignée.

Il est également indiqué qu'il est possible d'utiliser un verrouillage mécanique tel qu'un verrouillage à clé, un verrouillage à combinaison, un verrouillage à identification d'empreintes digitales, un verrouillage à carte magnétique ou à lecteur de carte ou un verrouillage électronique tel qu'un moteur à solénoïde avec une source d'énergie provenant d'une batterie.

Dans le cas d'un verrouillage à clé, on peut vraisemblablement supposer que dans une position le verrou est ouvert et dans une autre position le verrou est fermé.

Dans le cas d'un verrouillage à combinaison, comme avec un cadenas de bicyclette, on peut imaginer que lorsque la combinaison est correcte, le verrou peut être ouvert et lorsqu'elle n'est pas correcte, le verrou reste fermé.

Mais il n'est pas expliqué dans ce document comment fonctionnent les autres verrouillages.

En effet, que se passe-t-il avec un verrouillage à empreintes digitales ? L'utilisateur doit-il présenter un doigt pour ouvrir le verrou puis le présenter à nouveau pour fermer le verrou ? Il faudrait aussi deux lecteurs d'empreintes digitales, un au niveau du collier et un autre au niveau de la poignée sauf, bien sûr, à vouloir un actionnement simultané et non indépendant des deux verrouillages.

De même, avec un verrouillage à carte magnétique ou à lecteur de carte, l'utilisateur doit-il présenter la carte pour ouvrir le verrou puis une autre fois pour fermer le verrou ? Il faudrait dans ce cas aussi, deux lecteurs de carte, un pour le collier et un autre pour la poignée.

Dans le cas de verrouillages à clé ou à combinaison, ceux-ci étant mécaniques, ils doivent être au niveau du collier ou au niveau de la poignée. Il en faut donc deux, un pour le collier et un pour la poignée et il est impossible d'actionner le verrouillage à clé ou à combinaison du collier depuis la poignée, un actionnement mécanique à distance (d'un bout à l'autre de la laisse) étant impossible.

Enfin, dans le cas du verrouillage électronique précité, de quelle manière est-il actionné ?

Par ailleurs, l'utilisation d'une clé, d'une carte magnétique ou d'une autre carte implique ce celle-ci ne soit pas perdue, qu'elle puisse être transmise à une autre personne, par exemple, un promeneur de chiens.

Cependant, il va de soi qu'il est impossible de transmettre des empreintes digitales, le système ne peut dans ce cas être utilisé que par le propriétaire de l'animal domestique.

Depuis 2011, le nombre de vols de chiens n'a cessé de croître et, selon un article paru le 10 juin 2021 sur le site Internet de la revue française "Le Point" et citant le journal français "Le Figaro" daté du 9 juin 2021, 75 000 chiens seraient volés en France chaque année pour être revendus généralement entre 1500 et 3500 euros.

### Exposé sommaire de l'invention

Le but principal de l'invention est de proposer un kit antivol pour animal de compagnie qui soit sûr, simple, peu coûteux et facile et rapide à utiliser.

Un tel ensemble est destiné à être fixé à un élément fixe, comme un poteau, une barrière, une grille, etc.

Selon l'invention, ce but est atteint à l'aide d'un kit antivol conforme au point 1 suivant :
1. Kit antivol pour animal de compagnie, comprenant :
   1) un ensemble collier-laisse comprenant :
      - un support comportant des moyens de commande comprenant des moyens électroniques,
      - un lien dont une extrémité est fixée au support et l'autre est libre et apte à être fixée au support à l'aide de premiers moyens de verrouillage/déverrouillage électromagnétiques aptes à être commandés par les moyens de commande,
      - au moins une laisse dont une extrémité est fixée au support et l'autre est libre et comprend des deuxièmes moyens de verrouillage/déverrouillage électromagnétiques aptes à être commandés par les moyens de commande,
      - au moins une source d'énergie électrique pour alimenter au moins les moyens électroniques,
      dans lequel les moyens de commande comprennent en outre un récepteur coopérant avec les moyens électroniques et ceux-ci :
      - comprennent une mémoire contenant au moins un premier code et un deuxième code et
      - sont aptes à
         - transformer un signal reçu par le récepteur en un code, à
         - comparer ce code au premier code et au deuxième code, à
         - commander les premiers moyens de verrouillage/déverrouillage si le code est identique au deuxième code et à
         - commander les deuxièmes moyens de verrouillage/déverrouillage (30) si le code est identique au premier code, et
   2) un appareil apte à émettre au moins un premier signal et un deuxième signal destinés au récepteur des moyens de commande et correspondant respectivement au premier code et au deuxième code.

Des caractéristiques avantageuses du kit antivol du point 1 précité sont indiquées dans les points 2 à 9ter suivants :
2. Kit antivol pour animal de compagnie selon le point 1, dans lequel la commande des premiers et/ou des deuxièmes moyens de verrouillage/déverrouillage est une commande de déverrouillage.
3. Kit antivol pour animal de compagnie selon l'un des points 1 et 2, dans lequel les premiers et/ou deuxièmes moyens de verrouillage/déverrouillage sont du type « normalement fermé ».
4. Kit antivol pour animal de compagnie selon le point 3, dans lequel la commande des premiers et/ou deuxièmes moyens de verrouillage/déverrouillage consiste à alimenter ces moyens de verrouillage/déverrouillage en électricité.
5. Kit antivol pour animal de compagnie selon l'un des points 1 à 4, dans lequel le support présente une ouverture, préférablement de forme sensiblement allongée, pour le passage des doigts d'un utilisateur.
6. Kit antivol pour animal de compagnie selon l'un des points 1 à 5, dans lequel l'appareil est apte à émettre au moins un premier signal et un deuxième signal pendant une durée prédéterminée.
7. Kit antivol pour animal de compagnie selon l'un des points 1 à 6, dans lequel l'appareil comprend au moins deux boutons, un pour l'émission du premier signal et un autre pour l'émission du deuxième signal.
8. Kit antivol pour animal de compagnie selon l'un des points 1 à 7, dans lequel les durées des émissions des premiers et deuxième signaux sont réglables.
9. Kit antivol pour animal de compagnie selon l'un des points 1 à 8, dans lequel l'appareil comprend en outre deux boutons de réglage, un pour la durée du premier signal et un autre pour la durée du deuxième signal.
9bis. Kit antivol pour animal de compagnie selon l'un des points 1 à 9, dans lequel la durée du premier signal est différente de la durée du deuxième signal. 9ter. Kit antivol pour animal de compagnie selon l'un des points 1 à 9bis, dans lequel la durée du premier signal est supérieure à la durée du deuxième signal.

L'invention a également pour objet l'utilisation du kit antivol précité et une méthode d'attache sécurisée d'un animal de compagnie à un élément fixe à l'aide de ce kit, conforme au point 10 suivant :
10. Méthode d'attache sécurisée d'un animal de compagnie à un élément fixe, comprenant les étapes suivantes consistant à :
- se procurer un kit antivol selon l'une des points 1 à 9ter précités,
- actionner l'appareil afin qu'il émette le premier signal en direction du support,
- placer la laisse ou la partie formant collier ou harnais autour du cou ou du thorax de l'animal de compagnie,
- attacher les deuxièmes moyens de verrouillage/déverrouillage à la laisse ou à la partie formant collier ou harnais,
- se rendre à un endroit où l'animal de compagnie peut être attaché,
- actionner l'appareil afin qu'il émette le deuxième signal en direction du support,
- placer l'extrémité libre du lien autour d'un élément fixe,
- attacher l'extrémité libre du lien aux premiers moyens de verrou il lage/déverrouillage,
- laisser l'animal attaché et s'absenter.

Des caractéristiques avantageuses de la méthode du point 10 précité sont formulées au point 11 suivant :
11. Méthode selon le point précédent, dans laquelle
- l'étape consistant à attacher les deuxièmes moyens de verrouillage/déverrouillage à la laisse ou à la partie formant collier ou harnais est immédiatement suivie d'une étape consistant à attendre le verrouillage des deuxièmes moyens de verrouillage/déverrouillage,
   et/ou
- l'étape consistant à attacher l'extrémité libre du lien aux premiers moyens de verrouillage/déverrouillage est immédiatement suivie d'une étape consistant à attendre le verrouillage des premiers moyens de verrouillage/déverrouillage.

L'invention a aussi trait à une méthode de détachement d'un animal de compagnie qui a été attaché conformément à la méthode d'attache précitée, conformément au point 12 suivant :
12. Méthode de détachement d'un animal de compagnie attaché par la mise en oeuvre de la méthode selon le point 10 ou 11 précité, comprenant les étapes suivantes consistant à :
- actionner l'appareil afin qu'il émette le deuxième signal en direction du support,
- séparer l'extrémité libre du lien des premiers moyens de
   verrou il lage/déverrouillage,
- enlever le lien de l'élément fixe autour duquel il a été placé,
- s'éloigner en compagnie de l'animal de compagnie,
- ultérieurement, activer l'appareil afin qu'il émette le premier signal en direction du support,
- détacher les deuxièmes moyens de verrouillage/déverrouillage de la laisse ou de la partie formant collier ou harnais afin de pouvoir enlever la laisse ou la partie formant collier ou harnais du cou ou du thorax de l'animal de compagnie.

Ainsi, grâce à l'invention, la maîtresse ou le maître de l'animal de compagnie peut faire des emplettes en toute quiétude, sans craindre que son animal ne lui soit dérobé.

Il va sans dire que l'invention peut s'appliquer à d'autres animaux de compagnie que les chiens, par exemple les chats et les furets.

D'autres caractéristiques et avantages de l'invention vont maintenant être décrits en détail dans l'exposé suivant qui est donné en référence aux figures annexées, lesquelles représentent schématiquement :
[Fig. 1] : un ensemble collier-laisse du kit antivol selon l'invention fixé de façon sécurisée à un poteau ;
[Fig. 2] : l'ensemble collier-laisse de la figure 1 en vue de face ;
[Fig. 3] : l'ensemble collier-laisse des figures 1 et 2 en vue de face partiellement en coupe ;
[Fig. 4] : un exemple de moyens de verrouillage-déverrouillage convenant à l'ensemble collier-laisse du kit selon l'invention, en coupe selon la ligne B-B de la figure 5 ;
[Fig. 5] : les moyens de verrouillage/déverrouillage de la figure 4, en vue de dessus en coupe suivant la ligne A-A de la figure 4 ; et
[Fig. 6] : une variante de laisse comprenant une partie formant collier.

### Exposé détaillé de l'invention

### Ensemble collier-laisse du kit antivol selon l'invention

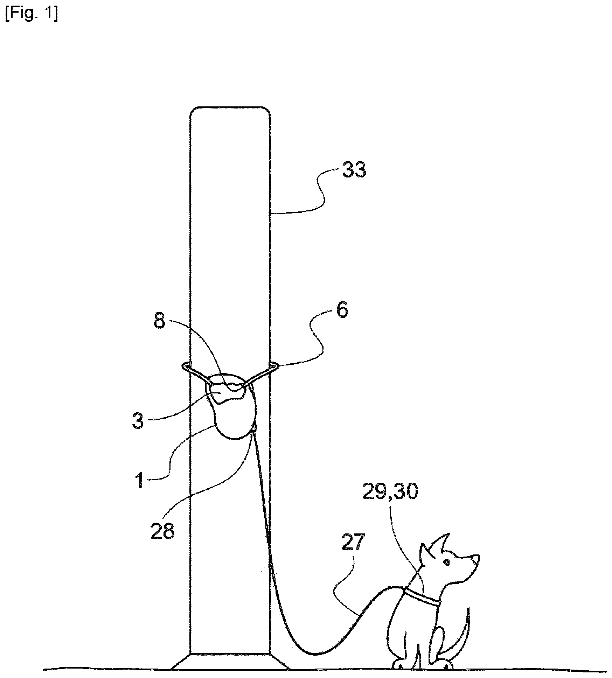

Sur la figure 1 est représenté un ensemble collier-laisse du kit antivol selon l'invention en cours d'utilisation. L'extrémité 29 de la laisse 27 est enroulée autour du cou d'un chien et fixée par les deuxièmes moyens de verrouillage 30 et le lien 6 est enroulé autour d'un poteau 33, son extrémité libre 8 étant fixée au support 1.

Ainsi, l'attachement du chien au poteau est sécurisé car le chien ne peut ni s'enfuir, ni être kidnappé.

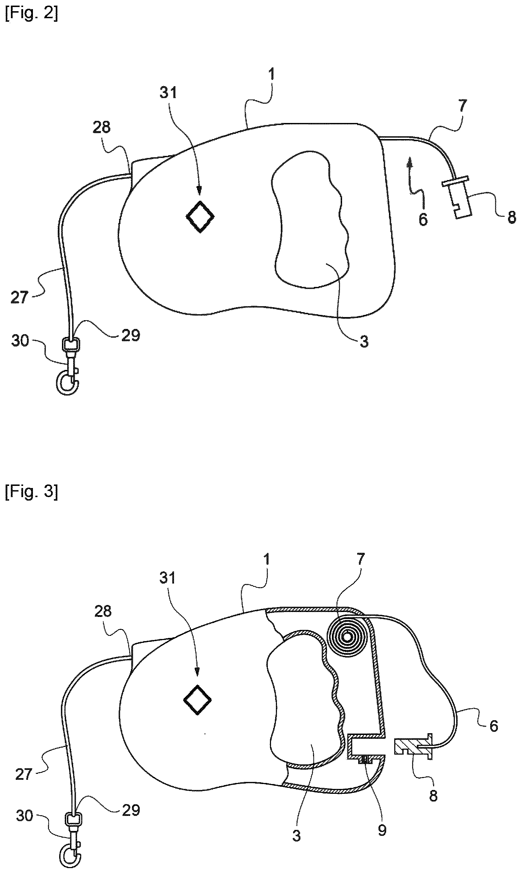

Comme on peut le voir sur la figure 2, le support 1 présentant de préférence une ouverture 3 avantageusement de forme allongée et formant sur un côté une poignée permettant à l'utilisateur de tenir aisément en main le support 1, quatre doigts, l'index, le majeur, l'annulaire et l'auriculaire, traversant l'ouverture 3 et le pouce restant à l'extérieur et faisant une boucle avec l'index.

L'ouverture 3 offre l'avantage de permettre de maintenir facilement le support d'une main tout en laissant l'autre main actionner l'appareil pour l'émission des premier et deuxième signaux de déverrouillage.

Le support 1 joue le rôle d'un boîtier contenant des moyens de commande, ceux-ci comprenant des moyens électroniques, dont généralement un microprocesseur (ou un microcontrôleur) et une mémoire contenant un programme à exécuter par le microprocesseur, ce programme organisant notamment la comparaison des codes, l'envoi des commandes de verrouillage ou déverrouillage, les temporisations, les éventuels avertissements, etc.

Le support 1 contient en outre une source d'énergie électrique telle qu'une ou plusieurs piles ou une batterie. Cette source d'énergie électrique alimente les moyens de commande (moyens électroniques, ...) les éventuels avertisseurs (lumineux, vibratoires, sonores), et généralement les premiers et deuxièmes moyens de verrouillage/déverrouillage, à moins que ceux-ci ne disposent de leur propre source d'énergie électrique.

De préférence, chaque source d'énergie électrique est une batterie. Il est avantageux de prévoir une prise préférentiellement du type mini-USB ou micro-USB pour la recharge de la batterie. Ainsi, l'utilisateur peut utiliser le chargeur de son ordiphone pour recharger la batterie, sans avoir à acheter un chargeur particulier pour l'ensemble collier-laisse du kit selon l'invention.

Selon l'invention, le support 1 comprend en outre un récepteur 31 coopérant avec les moyens électroniques.

Le lien 6 de l'ensemble laisse-collier selon l'invention a une extrémité longitudinale 7 fixée au support 1, l'autre extrémité longitudinale 8 étant libre.

La laisse 27 de l'ensemble laisse-collier selon l'invention a une extrémité longitudinale 28 fixée de préférence sur un côté du support 1 opposé à celui où est fixé le lien 6.

L'autre extrémité longitudinale 29 de la laisse est libre et comprend des deuxièmes moyens de verrouillage/déverrouillage 30.

L'extrémité libre 8 du lien 6 ou, de préférence, le support 1, comme on peut le voir sur la figure 3, est muni(e) de premiers moyens de verrouillage 9.

Si ceux-ci font partie du support 1, ils sont prévus préférentiellement à l'intérieur du support 1, pour éviter qu'ils fassent saillie à l'extérieur et restent accrochés ou dérangent l'utilisateur. Qui plus est, l'esthétique du support 1 s'en trouve améliorée.

Le lien 6 peut être de nature variée, il doit être souple pouvoir être manipulé facilement par l'utilisateur. Il doit être fermement fixé au support 1. Ce peut-être un câble. De préférence, comme on le voit sur la figure 3, il est du type enroulable/déroulable dans/hors du support 1, grâce à un mécanisme approprié connu.

Quant aux premiers moyens de verrouillage/déverrouillage 9, qu'ils soient prévus à l'extrémité 8 du lien 6 ou sur le support 1, ils sont du type électromagnétique et sont aptes à être commandés par les moyens de commande. Ils doivent permettre un maintien ferme de l'extrémité 8 au support 1 et donc du support 1 à l'élément fixe 33, de manière à rendre un arrachage impossible.

Les deuxièmes moyens de verrouillage/déverrouillage 30 sont aussi du type électromagnétique et aptes à être commandés par les moyens de commande.

Ils doivent permettre un maintien ferme de l'extrémité 29 de la laisse 27 au cou ou au thorax de l'animal de compagnie de façon à rendre un détachement impossible.

Les premiers et les deuxièmes moyens de verrouillage/déverrouillage 9,30 comprennent normalement des électroaimants.

Selon l'invention, les moyens de commande doivent être aptes à commander les premiers moyens de verrouillage/déverrouillage 9 et les deuxièmes moyens de verrouillage/déverrouillage 30 de manière indépendante. La commande peut consister à alimenter ces moyens de verrouillage/déverrouillage en électricité ou à couper leur alimentation en électricité.

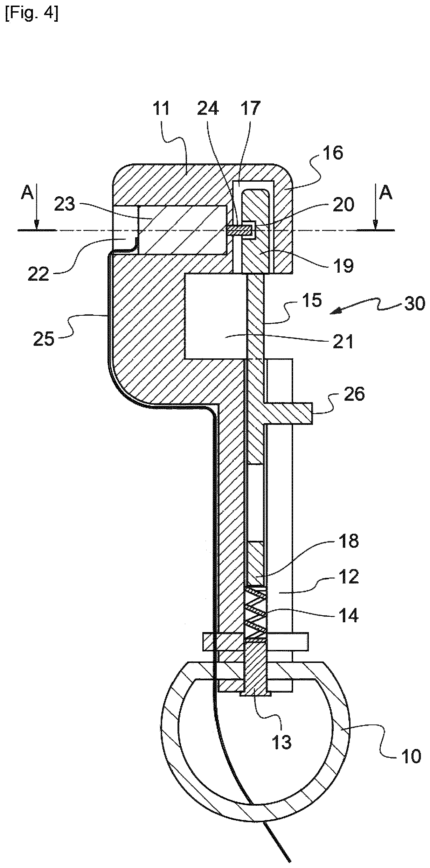

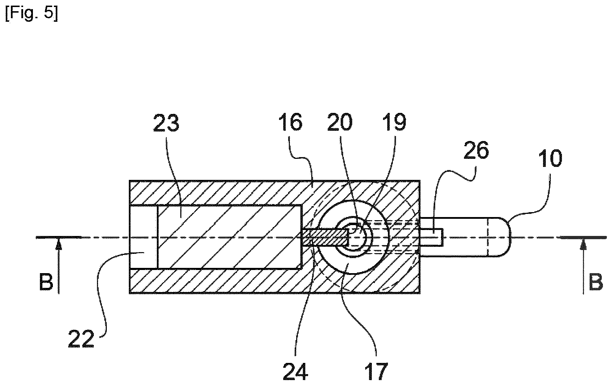

Sur les figures 4 et 5 est représenté un exemple de moyens de verrouillage/déverrouillage électromagnétiques 9,30. Ces derniers peuvent ressembler globalement à un genre de mousquetons comme ceux déjà utilisés avec des laisses ou servant de porte-clés et qui comprennent :
- un anneau de fixation 10 à la laisse 27,
- un corps principal 11 comportant une extrémité en forme de cylindre creux 12 fendu longitudinalement à laquelle est solidarisé l'anneau 10,
- un rivet 13 enfoncé à la base ou extrémité libre du cylindre 12 et servant de butée à
- un ressort 14 prévu pour exercer une poussée sur l'extrémité longitudinale 18 d'une tige de verrouillage 15 vers une autre extrémité 16 du corps principal 11 ;
- un évidement 17 de préférence en forme de trou borgne prévu dans l'extrémité 16 afin de recevoir l'autre extrémité longitudinale 19 de la tige de verrouillage 15 ; cette extrémité 19 peut avoir un diamètre supérieur à celui du reste de la tige 15 et comprenant un trou 20 ; le corps 11 comporte une cavité 21 prévue pour recevoir une boucle de collier ou harnais ou une partie de la laisse 27 telle qu'un chaînon ou maillon, laquelle boucle ou partie de laisse 27 étant alors destinée, comme on peut le voir sur la figure 4, à être traversée par la tige de verrouillage 15 qui traverse et ferme la cavité 21 ;
- le corps 11 comportant un perçage 22 dans lequel a été inséré un micro-électroaimant 23 en forme de solénoïde et du type tirant, à savoir que sa tige 24 rentre à l'intérieur du solénoïde lorsque l'électroaimant est activé, c'est-à-dire parcouru par un courant électrique ; le trou 20 de l'extrémité 19 de la tige 15 étant tourné vers la tige 24 afin de la loger en temps normal, c'est-à-dire lorsque l'électroaimant 23 n'est pas alimenté ; lorsque l'électroaimant 23 est alimenté en électricité, la tige de l'électroaimant 24 se rétracte et la tige de verrouillage 15 peut alors se déplacer vers l'extrémité 12 du corps principal 11 à l'encontre de la force du ressort 14 et libérer la boucle du collier ou harnais ou la partie de la laisse 27 retenue,
- afin qu'un utilisateur puisse déplacer facilement la tige de verrouillage 15 vers l'extrémité 12, cette tige est munie d'un doigt 26 traversant la fente de l'extrémité 12 et faisant saillie vers l'extérieur de cette extrémité afin de pouvoir être poussé par l'utilisateur, généralement par l'un de ses pouces.

Les deuxièmes moyens de verrouillage/déverrouillage 30 sont donc aptes à se fixer/détacher à/de la laisse 27 elle-même.

Bien que l'on puisse envisager que les moyens de commande commandent les deuxièmes moyens de verrouillage/déverrouillage 30 au moyen d'une liaison par ondes électromagnétiques (Bluetooth^{®} par exemple, une pile, batterie ou autre source d'énergie électrique étant alors prévue spécialement au niveau des deuxièmes moyens de verrouillage/déverrouillage, pour alimenter à la fois l'électronique locale et le verrouillage ou le déverrouillage), de préférence les moyens de commande envoient un signal électrique aux deuxièmes moyens de verrouillage/déverrouillage 30 à l'aide de moyens de liaison 25, qui sont préférablement un fil électrique 25 connecté aux moyens de commande, accompagnant la laisse 27 et rejoignant l'électroaimant 23 pour l'alimenter.

De préférence, les électroaimants sont du type tirant, à savoir que leurs tiges rentrent à l'intérieur des solénoïdes lorsqu'ils sont activés. En effet, ceci permet d'obtenir un système normalement fermé. Ainsi, en cas de décharge de la pile ou batterie ou d'un défaut quelconque d'alimentation (ou d'interruption de la liaison Bluetooth^{®}...), le chien reste attaché. Un voleur qui réussirait à couper le fil 25 ne pourrait donc pas dérober le chien, sauf s'il connectait le fil coupé à une pile par exemple. Toutefois, ceci ne serait pas faisable discrètement, ni facilement, car il faudrait en même temps, déplacer la tige de verrouillage 15 et retirer la partie de laisse 27 de la cavité 21.

Si les électroaimants étaient du type rentrant, il faudrait les alimenter en permanence, ce qui constituerait un gaspillage d'énergie électrique. En outre, en cas de décharge de la pile ou batterie ou de défaut d'alimentation (ou d'interruption de la liaison Bluetooth^{®}) le collier ne serait plus verrouillé et le chien pourrait être enlevé ou s'échapper.

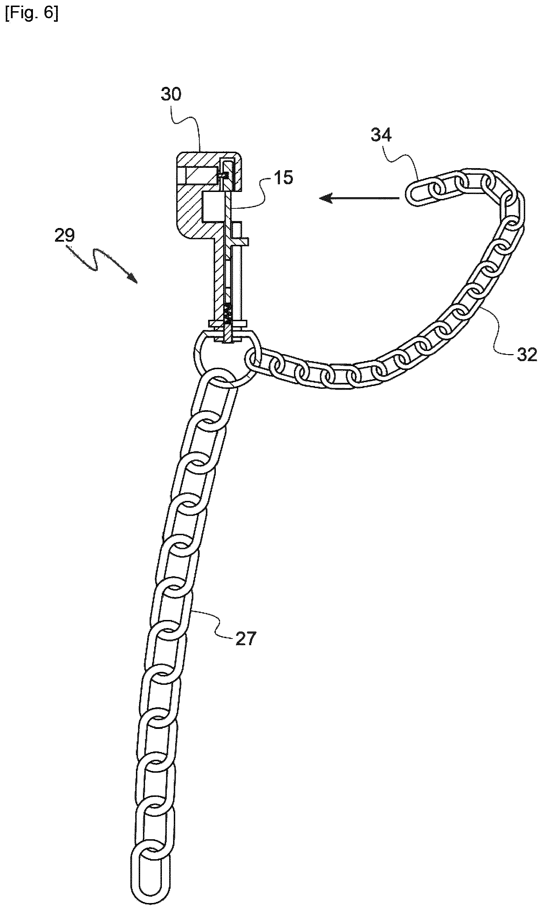

Selon un autre mode de réalisation visible sur la figure 6, la laisse 27 comprend, de préférence au niveau de son extrémité libre 29, une partie 32 formant collier ou harnais, destinée à être fixée par la maîtresse ou le maître du chien autour du corps de l'animal (cou ou thorax).

Cette variante est particulièrement intéressante lorsque la laisse 27 est une grosse chaîne et/ou à laquelle il est difficile voire impossible de fixer les deuxièmes moyens de verrouillage-déverrouillage 30.

Cette partie 32 formant collier ou harnais est apte à être fixée aux moyens de verrouillage/déverrouillage 30, de préférence par son extrémité 34. Elle peut aussi comprendre à son extrémité une boucle (non représentée) qui peut être maintenue dans la cavité 21 en étant traversée par la tige de verrouillage 15. Avantageusement, la partie 32 formant collier ou harnais destinée à entourer le cou ou le thorax de l'animal de compagnie comprend, sur sa longueur, plusieurs endroits de fixation aux moyens de verrouillage/déverrouillage 30.

Ceci lui permet une adaptation à la taille du cou ou du thorax de l'animal et peut être facilement obtenu, par exemple lorsque, comme on le voit sur la figure 6, la partie 32 formant collier ou harnais est une chaîne, ou inclut une section formant chaîne, avec des chaînons pouvant coopérer avec la tige de connexion 15, c'est-à-dire être traversés par cette tige de connexion 15. Ainsi, chaque chaînon correspond à une longueur déterminée du tour du cou ou du thorax d'un animal et la partie 32 formant collier ou harnais peut par conséquent servir à attacher des animaux de tailles différentes.

Selon un mode de réalisation avantageux, le support 1 de l'ensemble collier-laisse du kit antivol selon l'invention comprend en outre des moyens d'avertissement sonores et/ou visuels et/ou vibratoires commandés par les moyens de commande.

Bien entendu, la laisse 27 et le lien 6 doivent être suffisamment solides pour résister à la traction des chiens et à celle des voleurs de chiens.

La laisse 27 peut par exemple être une chaîne et le fil électrique 25 peut passer à travers ses chaînons. De préférence, la chaîne et le fil 25 sont entourés d'une gaine, par exemple en matière plastique souple, comme pour un cadenas de bicyclette, ou en mailles métalliques comme celles d'une cotte de mailles. L'extrémité 28 de la laisse 27 doit être fixée fermement au support 1, par exemple par rivetage.

De préférence, la laisse 27 est extractible (rétractable) et escamotable, comme un câble électrique d'aspirateur que l'utilisateur tire pour le faire sortir de l'aspirateur et le brancher au secteur et qui s'escamote après utilisation à l'intérieur de l'appareil, grâce à un enrouleur approprié.

### Appareil du kit antivol selon l'invention

L'ensemble collier-laisse qui vient d'être décrit est destiné à fonctionner avec un appareil et à former avec lui le kit antivol selon l'invention.

Selon l'invention, cet appareil est apte à émettre au moins un premier signal et un deuxième signal pendant une durée prédéterminée. Il comprend donc de préférence des moyens électroniques d'émission alimentés par une ou plusieurs piles ou une batterie. Il est avantageux de prévoir sur l'appareil une prise préférentiellement du type mini-USB ou micro-USB pour la recharge de la batterie. Ainsi, l'utilisateur peut utiliser le chargeur de son ordiphone pour recharger la batterie, sans avoir à acheter un chargeur particulier pour l'appareil.

Les signaux sont émis indépendamment l'un de l'autre. L'appareil comprend donc de préférence au moins deux boutons d'activation, un pour l'émission du premier signal et un autre pour l'émission du deuxième signal.

Il peut être prévu que la durée du premier signal soit différente de la durée du deuxième signal. Ceci tient compte du fait que l'utilisateur fixe normalement le support à un poteau par exemple, à la hauteur de ses mains, alors qu'il doit en principe se baisser pour attacher la laisse ou le harnais à son chien, ce qui prend plus de temps. Par conséquent, la durée de déverrouillage des deuxièmes moyens de verrouillage/déverrouillage est de préférence supérieure à celle des premiers moyens de verrouillage/déverrouillage.

De préférence, les durées des émissions des premiers et deuxième signaux sont réglables. Ceci peut être obtenu en prévoyant deux boutons de réglage, un pour la durée du premier signal et un autre pour la durée du deuxième signal. Les boutons de réglage peuvent par exemple être solidaires de potentiomètres connectés aux moyens électroniques d'émission.

Bien qu'il soit parfaitement concevable de produire un appareil *sui generis* pour le kit antivol selon l'invention, il est judicieux d'utiliser un appareil capable d'émettre des signaux et qui constitue de nos jours quasiment une extension du corps humain, à savoir, un ordiphone, mieux connu sous les marques Smartphone^{®} ou iPhone^{®}.

L'émission des premier et deuxième signaux et le réglage des durées des émissions peuvent être commandés par une application qui peut être une application pour mobile, téléchargée au préalable par l'utilisateur sur un site internet ou une boutique en ligne d'applications mobiles (en anglais, "store", comme "Galaxy Store", "Play Store", etc.)

Les signaux peuvent être des sons inaudibles par l'utilisateur (infrasons, ultrasons...) ou, de préférence, des ondes électromagnétiques comme des ondes radio telles que celles utilisées jadis dans les talkies-walkies, ou des ondes électromagnétiques émises suivant des normes plus complexes et plus récentes comme les normes Bluetooth^{®}, Wifi^{®}, etc.

### Utilisation générale - méthode selon l'invention

Globalement, le kit antivol selon l'invention peut être utilisé en exécutant la méthode suivante dont les étapes consistent à :
- se procurer un kit antivol,
- actionner l'appareil afin qu'il émette le premier signal en direction du support,
- placer la laisse 27 ou la partie 32 formant collier ou harnais autour du cou ou du thorax de l'animal de compagnie,
- attacher les deuxièmes moyens de verrouillage/déverrouillage 30 à la laisse 27 ou à la partie 32 formant collier ou harnais,
- attendre le verrouillage des deuxièmes moyens de verrouillage/déverrouillage 30,
- se rendre à un endroit où l'animal de compagnie peut être attaché,
- actionner l'appareil afin qu'il émette le deuxième signal en direction du support,
- placer l'extrémité libre 8 du lien 6 autour d'un élément fixe 33,
- attacher l'extrémité libre 8 du lien 6 aux premiers moyens de verrouillage/déverrouillage 9,
- attendre le verrouillage des premiers moyens de verrouillage/déverrouillage 9,
- laisser l'animal attaché et s'absenter l'esprit tranquille, par exemple pour faire une course.

Ultérieurement, au retour, l'utilisateur peut :
- actionner l'appareil afin qu'il émette le deuxième signal en direction du support,
- séparer l'extrémité libre 8 du lien 6 des premiers moyens de verrouillage/déverrouillage 9,
- enlever le lien 6 de l'élément fixe 33 autour duquel il a été placé,
- s'éloigner en compagnie de l'animal de compagnie,
- ultérieurement, activer l'appareil afin qu'il émette le premier signal en direction du support,
- détacher les deuxièmes moyens de verrouillage/déverrouillage 30 de la laisse 27 ou de la partie 32 formant collier ou harnais afin de pouvoir enlever la laisse 27 ou la partie 32 formant collier ou harnais du cou ou du thorax de l'animal de compagnie.

Bien entendu, l'ordre des étapes précitées peut être modifié, dans la mesure du possible. Par exemple, lorsque l'utilisateur est dans un parc où son chien s'ébat librement sans laisse et que l'utilisateur désire utiliser les toilettes du parc, il doit attacher son chien, de préférence à proximité. Il peut alors d'abord fixer le support 1 à la clôture du parc, puis fixer la laisse 27 ou la partie 32 formant collier ou harnais au chien.

Ensuite, après s'être soulagé, il peut libérer le chien pour le laisser courir à sa guise puis détacher le support 1 de la clôture.

Pour l'activation des moyens de verrouillage/déverrouillage, les moyens électroniques reconnaissent les codes saisis par l'utilisateur, puis envoient un courant électrique aux électroaimants pendant un certain temps, pour les alimenter afin qu'ils rétractent leur tige respective (dans le cas d'électroaimants du type rentrant). Ensuite, sous l'action des ressorts, les tiges reviennent en position verrouillée.

Si l'ensemble collier-laisse du kit antivol selon l'invention comprend des moyens d'avertissement sonores et/ou visuels et/ou vibratoires, les moyens de commande peuvent faire fonctionner ces moyens d'avertissement en même temps que les électroaimants sont activés, pour signaler à l'utilisateur :
- lorsque le premier code a été reconnu par les moyens électroniques, que la laisse 27 ou la partie 32 formant collier ou harnais peut être attachée au cou ou thorax de l'animal,
- lorsque le deuxième code a été reconnu par les moyens électroniques, que le lien 6 peut être enroulé autour d'un élément fixe 33 et que son extrémité libre 8 peut être assemblée avec le support 1, notamment en introduisant l'extrémité 8 dans le support 1.

On notera qu'il est possible d'utiliser le kit antivol selon l'invention pour attacher de façon sécurisée puis détacher, des objets tels que des bicyclettes, des trottinettes, des gyropodes, etc.

## Revendications

1. Kit antivol pour animal de compagnie, comprenant :
1) un ensemble collier-laisse comprenant :
- un support (1) comportant des moyens de commande comprenant des moyens électroniques,
- un lien (6) dont une extrémité (7) est fixée au support (1) et l'autre (8) est libre et apte à être fixée au support (1) à l'aide de premiers moyens de verrouillage/déverrouillage électromagnétiques (9) aptes à être commandés par les moyens de commande,
- au moins une laisse (27) dont une extrémité (28) est fixée au support (1) et l'autre (29) est libre et comprend des deuxièmes moyens de verrouillage/déverrouillage électromagnétiques (30) aptes à être commandés par les moyens de commande,
- au moins une source d'énergie électrique pour alimenter au moins les moyens électroniques,
dans lequel les moyens de commande comprennent en outre un récepteur (31) coopérant avec les moyens électroniques et ceux-ci :
- comprennent une mémoire contenant au moins un premier code et un deuxième code et
- sont aptes à
• transformer un signal reçu par le récepteur (31) en un code, à
• comparer ce code au premier code et au deuxième code, à
• commander les premiers moyens de verrouillage/déverrouillage (9) si le code est identique au deuxième code et à
• commander les deuxièmes moyens de verrouillage/déverrouillage (30) si le code est identique au premier code, et
2) un appareil apte à émettre au moins un premier signal et un deuxième signal destinés au récepteur (31) des moyens de commande et correspondant respectivement au premier code et au deuxième code.

2. Kit antivol pour animal de compagnie selon la revendication 1, dans lequel la commande des premiers (9) et/ou des deuxièmes (30) moyens de verrouillage/déverrouillage est une commande de déverrouillage.

3. Kit antivol pour animal de compagnie selon l'une des revendications 1 et 2, dans lequel les premiers (9) et/ou deuxièmes (30) moyens de verrouillage/déverrouillage sont du type « normalement fermé ».

4. Kit antivol pour animal de compagnie selon la revendication 3, dans lequel la commande des premiers (9) et/ou deuxièmes (30) moyens de verrouillage/déverrouillage consiste à alimenter ces moyens de verrouillage/déverrouillage (9,30) en électricité.

5. Kit antivol pour animal de compagnie selon l'une des revendications 1 à 4, dans lequel le support présente une ouverture (3) (de forme avantageusement sensiblement allongée) pour le passage des doigts d'un utilisateur.

6. Kit antivol pour animal de compagnie selon l'une des revendications 1 à 5, dans lequel l'appareil est apte à émettre au moins un premier signal et un deuxième signal pendant une durée prédéterminée.

7. Kit antivol pour animal de compagnie selon l'une des revendications 1 à 6, dans lequel l'appareil comprend au moins deux boutons, un pour l'émission du premier signal et un autre pour l'émission du deuxième signal.

8. Kit antivol pour animal de compagnie selon l'une des revendications 1 à 7, dans lequel les durées des émissions des premiers et deuxième signaux sont réglables.

9. Kit antivol pour animal de compagnie selon la revendication 8, dans lequel l'appareil comprend en outre deux boutons de réglage, un pour la durée du premier signal et un autre pour la durée du deuxième signal.

10. Méthode d'attache sécurisée d'un animal de compagnie à un élément fixe, comprenant les étapes suivantes consistant à :
- se procurer un kit antivol selon l'une des revendications 1 à 9,
- actionner l'appareil afin qu'il émette le premier signal en direction du support,
- placer la laisse (27) ou la partie (32) formant collier ou harnais autour du cou ou du thorax de l'animal de compagnie,
- attacher les deuxièmes moyens de verrouillage/déverrouillage (30) à la laisse (27) ou à la partie (32) formant collier ou harnais,
- se rendre à un endroit où l'animal de compagnie peut être attaché,
- actionner l'appareil afin qu'il émette le deuxième signal en direction du support,
- placer l'extrémité libre (8) du lien (6) autour d'un élément fixe (33),
- attacher l'extrémité libre (8) du lien (6) aux premiers moyens de verrouillage/déverrouillage (9),
- laisser l'animal attaché et s'absenter.

11. Méthode selon la revendication précédente, dans laquelle
- l'étape consistant à attacher les deuxièmes moyens de verrouillage/déverrouillage (30) à la laisse (27) ou à la partie (32) formant collier ou harnais est immédiatement suivie d'une étape consistant à attendre le verrouillage des deuxièmes moyens de verrouillage/déverrouillage (30),
et/ou
- l'étape consistant à attacher l'extrémité libre (8) du lien (6) aux premiers moyens de verrouillage/déverrouillage (9) est immédiatement suivie d'une étape consistant à attendre le verrouillage des premiers moyens de verrouillage/déverrouillage (9).

12. Méthode de détachement d'un animal de compagnie attaché par la mise en oeuvre de la méthode selon la revendication 10 ou 11, comprenant les étapes suivantes consistant à :
- actionner l'appareil afin qu'il émette le deuxième signal en direction du support,
- séparer l'extrémité libre (8) du lien (6) des premiers moyens de verrouillage/déverrouillage (9),
- enlever le lien (6) de l'élément fixe (33) autour duquel il a été placé,
- s'éloigner en compagnie de l'animal de compagnie,
- ultérieurement, activer l'appareil afin qu'il émette le premier signal en direction du support,
- détacher les deuxièmes moyens de verrouillage/déverrouillage (30) de la laisse (27) ou de la partie (32) formant collier ou harnais afin de pouvoir enlever la laisse (27) ou la partie (32) formant collier ou harnais du cou ou du thorax de l'animal de compagnie.
